# EUROPEAN PATENT SPECIFICATION

(11) **EP 0 574 269 B1**
(45) Date of publication and mention of the grant of the patent: **19.08.1998**
(21) Application number: 93304547.8
(22) Date of filing: 11.06.1993
(51) Int. Cl.: G02F 1/1335, G02F 1/1333, H04N 9/31

(54) **Projecting type color image display device**
Farbsichtanzeigevorrichtung vom Projektionstyp
Dispostif de visualisation en couleur du type projection

(30) Priority: 12.06.1992 JP 153884/92
(43) Date of publication of application: 15.12.1993
(73) Proprietor: SHARP KABUSHIKI KAISHA, Osaka-shi Osaka 545 (JP)
(72) Inventor: Nakanishi, Hiroshi, Tenri-shi Nara (JP)
(74) Representative: White, Martin David

(56) References cited:
- EP-A- 440 495
- EP-A- 450 780
- PATENT ABSTRACTS OF JAPAN vol. 16, no. 301 (P-1379) 3 July 1992 & JP-A-04 081 719 ( NIPPON SHEET GLASS ) 16 March 1992
- PATENT ABSTRACTS OF JAPAN vol. 13, no. 319 (P-901) 19 July 1989 & JP-A-01 088 501 ( NIPPON SHEET GLASS ) 3 April 1989

## Description

### BACKGROUND OF THE INVENTION

### (1) Filed of the invention

The present invention relates to a projecting type color image display device having an array of micro-lenses.

### (2) Description of the Prior Art

In order to realize a large-sized color image display with a light-weighted, compact type device, there are used projecting type color image display devices. In a projecting type color image display device, a display panel is illuminated with light from the backside thereof, and the light passes through the display panel and color filter, etc., to create a projected color image on a screen.

There are two ways for displaying color images, that is, one is triple panel system and the other is single panel system. In the triple panel system, white light emitted from a light source is separated into three primary colors of red, green and blue, and the separated light beams are made incident on three different display panels corresponding to the respective colors. Each display panel creates an image corresponding to its color, and then the thus formed images are put together or overlapped to perform colored display. In this way, the triple panel system requires separated panels corresponding to respective colors, so that the display image device increases in size and weight, and to make matters worse, it has a high fabrication cost.

In contrast with this, the single panel system is provided with color filters of red, green and blue on a single display panel, in order to project colored images. Accordingly, the single panel system does not need three display panels as the triple panel type display does, and therefore the use of the single panel method can make the display device small and light-weight and reduce the cost.

Nevertheless, in order for the single panel system to obtain as a high resolution as the triple panel system can provide, it is necessary to form three times as many picture elements (or pixels) on the single display panel as those on each of the display panels used for the triple panel system. Thus, if the number of picture elements formed on a display panel is increased, each picture element must be reduced to the minimum in size. The size of switching elements equipped for respective picture elements as well as the width of bus cables, etc., might be made small to some extent as the pixel electrode reduces in size, but when the size of the electrode drops below a certain size, the aforementioned size and width, etc., cannot be made smaller any more in proportion to the reduction of the size of pixel electrodes. Accordingly, for display devices equipped with a display panel having small pixel electrodes, a numeral aperture defined as a ratio of the total area of pixel electrodes to the total area of display image frame, becomes low. When the same light source is used, the display devices having low numeral aperture generally exhibits a dimmer display image than display devices of high numeral aperture.

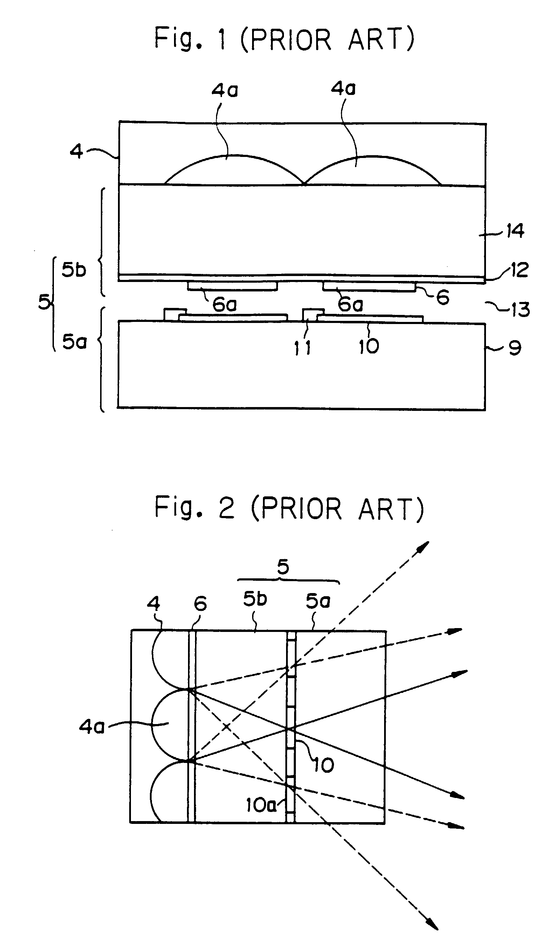

To solve the above problem, there have been developed projecting type color image display devices with a micro-lens array. Fig.1 is a cross-section of a liquid crystal display panel equipped with a micro-lens array. A liquid crystal display panel 5 shown in Fig.l comprises an active matrix substrate 5a and an opposing substrate 5b facing each other and holding a liquid crystal layer 13 therebetween as a display medium. The active matrix substrate 5a includes a transparent substrate 9, pixel electrodes 10 formed on transparent substrate 9 on the side of liquid crystal layer 13, and thin film transistors (to be referred to as TFT) 11 functioning as switching devices. The opposing substrate 5b includes a transparent substrate 14, and an opposing electrode 12 formed on transparent substrate 14 on the side of liquid crystal layer 13. Provided on transparent substrate 14 on the opposite side of liquid crystal layer 13 is a micro-lens array 4 having many micro-lenses 4a. Color filter 6 is made from organic material, etc., and the color filter is generally known to be provided in three different manners. In the liquid crystal display panel 5 shown in Fig.1, color filter sections 6a are formed on opposing substrate 5b in such a manner that each color filter section 6a corresponds to a pixel electrode 10.

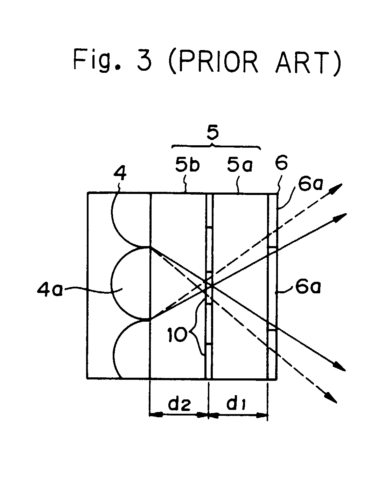

The other known methods of forming color filter 6 include a formation in which the color filter is provided integratedly with micro-lens array 4 as shown in Fig.2; and another arrangement in which color filter 6 is provided on liquid crystal display panel 5 opposite micro-lens array 4 as shown in Fig.3. In the liquid crystal display panel 5 shown in Fig.3, a thickness dl of active matrix substrate 5a is in general prepared approximately equal to a thickness d2 of opposing substrate 5b.

In this connection, the positional relation between active matrix substrate 5a and opposing substrate 5b of liquid crystal display panel 5 with respect to micro-lens array 4 can be reversed. That is, active matrix substrate 5a may be formed on the side of micro-lens array 4.

Such projecting type color image display devices equipped with micro-lens array 4 of these three kinds, however, suffer from the following problems.

In the case where color filter 6 is disposed inside liquid crystal layer 13 as shown in Fig.1, light is incident on color filter 6 made of organic material by micro-lens array 4, therefore discoloration of color filter 6 is accelerated. As a result, deterioration of the color filter as only a part of the display device might make the total device unusable Moreover, since color filter 6 is formed on opposing substrate 5b of liquid crystal display panel 5, it is impossible to select nondefective color filter 6 and nondefective liquid crystal display panel 5 separately to produce a display device. Accordingly, this method suffers from lowerness of production yield.

In the case where color filter 6 is formed integratedly with micro-lens array 4 as shown in Fig.2, different color components are liable to mix with one another in the display image, making the color reproduction range narrower. This is because if light without collimation is incident onto a micro-lens 4a, some part of the light reaches neighboring pixel electrodes 10a next to a pixel electrode 10 onto which the light should be incident, as indicated by broken lines in Fig.2, causing color mixture.

Also in the case where color filter 6 is formed on liquid crystal display panel 5 opposite micro-lens array 4, as shown in Fig.3, color mixture occurs which is attributed to the same reason as in the image display device shown in Fig.2, that is, the lack of collimation of incident light. In addition, there occurs another color mixture due to aberration of micro-lenses 4a. If a micro-lens 4a has any aberration, the focus deviates from an optimum value. There may be two possibilities of focal length, that is, the focal length is greater or smaller than the thickness d2 of opposing substrate 5b that is formed on the side of micro-lens array 4. If the thickness d2 is less than the focal length, the range of light reaching color filter 6 tends to become small, no problem occurs. On the other hand, if the thickness d2 is greater than the focal length, a part of light having passed through a pixel electrode 10 does not enter a corresponding color filter section 6a, but goes to its neighboring filter sections 6a, as indicated by broken lines in Fig.3. As a result, the image display device shown in Fig.3, suffers from the defect that the color reproduction range becomes further narrower.

EP-A-0 440 495, on which the preamble of claim 1 is based, discloses a projection type image display device for displaying a monochromatic image The device has a display panel and two micro-lens arrays One micro-lens array is provided on each substrate of the display panel, and the focal lengths of the two micro-lens arrays are different The micro-lens arrays are arranged such that their focal planes are co-incident, when collimated light is incident on the first micro-lens array the light leaving the device will also be collimated

It is an object of the present invention to provide a projection type colour image display device which can broaden the range of colour reproduction by preventing colour mixing, and which improves the production yield by providing a replaceable colour filter

The present invention provides a projection type colour image display device having a micro-lens array, and a liquid crystal display panel comprising a pair of substrates, light being incident, in use, on the micro-lens array side of the device; wherein the device further comprises blocking means disposed between the pair of substrates;
the display device being characterised in that the substrate of said liquid crystal display panel nearer to said micro-lens array is thicker than the substrate of said panel further from the micro-lens array, in that the display device comprises a colour filter having adjacent colour filter section, the micro-lens array, the liquid crystal display panel and the colour filter section being disposed in that order; and in that the blocking means, the pixels of the liquid crystal panel and the colour filter sections are so arranged and so dimensioned that light which passes through a pixel is incident only on a colour filter section corresponding to the pixel, the light passing through the colour filter sections being divergent.

In a preferred embodiment micro-lens array is formed by process of ion exchanging, swelling, thermally sagging or machining.

In a preferred embodiment an illumination means for illuminating the display device uses any of a telecentric illuminating system, a critical illuminating system and a Köhler illuminating system.

With the configurations in the projecting type image display device of the present invention, the thickness of the substrate of the liquid crystal display panel that is disposed nearer to the micro-lens array is taken to be greater than the thickness of the substrate of the panel that is disposed farther from the micro-lens array. Consequently, even if micro-lenses include aberration to exhibit smaller focal lengths than the thickness of the near side substrate of the micro-lens array, it is possible to prevent color mixture. Specifically, in this device, the far side substrate from the micro-lens array is designed to be thin, so that the light which would have caused color mixture in the conventional device can be blocked out by blocking portion of the display panel. That is, light having passed through a pixel electrode cannot fail to enter its corresponding color filter section.

### BRIEF DESCRIPTION OF THE DRAWINGS

Fig.1 is a cross-section showing a liquid crystal panel display panel equipped with a prior art micro-lens array;
Fig.2 is a cross-section showing another liquid crystal display panel equipped with a prior art micro-lens array;
Fig.3 is a cross-section showing still another liquid crystal display panel equipped with a prior art micro-lens array;
Fig.4 is a schematic structural view showing a projecting type color image display device in accordance with an embodiment of the present invention;
Fig.5 is an enlarged view of a micro-lens array and a liquid crystal display panel shown in Fig.4; and
Fig.6 is a chart showing a chromaticity diagram for an image display device of an embodiment of the invention as well as for an image display device of prior art.

### DESCRIPTION OF THE PREFERRED EMBODIMENTS

An embodiment of the present invention will hereinafter be described with reference to the accompanying drawings.

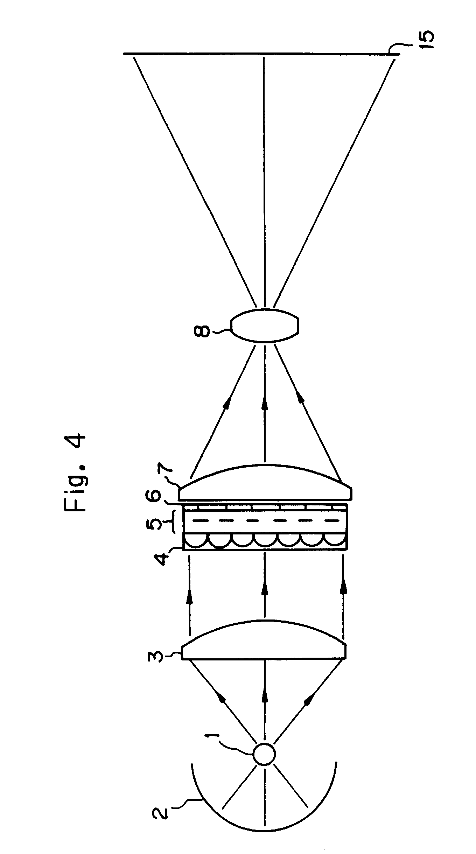

Fig.4 is a schematic structural view showing a projecting type color image display device in accordance with an embodiment of the present invention. In this image display device, light emitted from a light source 1 is made parallel approximately, and then the collimated light passes through a micro-lens array 4 to be incident on a liquid crystal display panel 5. The light having passed through an image formed on liquid crystal display panel 5 proceeds in a course through a color filter 6, a field lens 7 and a projecting lens 8 in that order to create a projected image on a screen 15. There is provided a reflective mirror 2 opposite to condenser lens 3 with light source 1 between so that the light emitted from light source 1 in the opposite direction to condenser lens 3 can be reflected toward condenser lens 3.

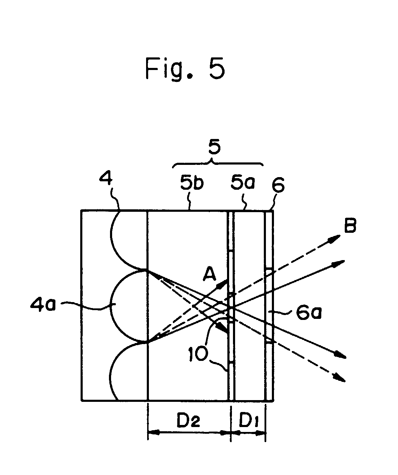

Fig.5 is an enlarged view showing a micro-lens array 4 and a liquid crystal display panel 5 of the projecting type color image display device shown in Fig.4. The liquid crystal display panel comprises an active matrix substrate 5a having a thickness D1, and an opposing substrate 5b having a thickness D2, with D2 being greater than D1 . Provided on the side of opposing substrate 5b is a micro-lens array 4 while a color filter 6 is disposed on the side of active matrix substrate 5a. Further, micro-lenses 4a, pixel electrodes 10 and color filter sections 6a are arranged in corresponding positions to one another, respectively. As micro-lens array 4, use is made of lenses that are made of glass subjected to the ion exchange process so as to have a refractive distribution.

In the image display device having the above structure, even if micro-lenses 4a include aberration to exhibit smaller focal lengths than the thickness of opposing substrate 5b, it is possible to prevent color mixture. More specifically, in this device, active matrix substrate 5a is designed to be thin, so that the light which would have caused color mixture in the conventional devices can be blocked out by blocking portions on liquid crystal display panel 5 as indicated by broken line A in Fig.5. That is, the light that fails to enter the corresponding color filter section 6a as indicated by the broken line in Fig.3 (prior art example) can be completely excluded. Again, even if, for example, micro-lenses 4a have aberration, light having passed through a pixel electrode 10 cannot fail to enter a corresponding color filter section 6a as indicated by the broken line B in Fig.5. Consequently, it is possible to prevent the color mixture, thus broadening the range of color reproduction.

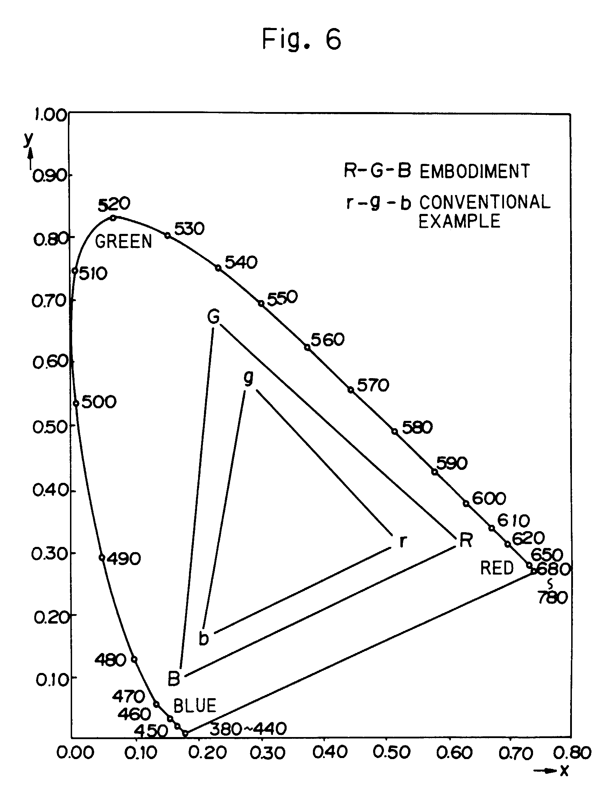

Fig.6 is a chart showing chromaticity diagram for an embodiment of the invention and for a conventional example. In the embodiment of the invention, the thickness D1 of active matrix substrate 5a is for example 0.8mm, the thickness D2 of opposing substrate 5b as the substrate having micro-lens array 4 formed on its one side is set up to be, for example, 1.1mm. The chromaticity for the device of the embodiment is shown by a region R-G-B. As a conventional example, the thickness d1 and d2 of the respective substrates 5a and 5b are set up as to be both 1.1 mm, and the chromaticity for the conventional example is shown by a region r-g-b. A region Red-Green-Blue indicates the reference chromaticity of NTSC (National Television System Committee) standard. As is apparent from Fig.6, the device of the embodiment of the present invention has a broader range of color reproduction than the prior art device.

Further, as the device of the embodiment has the above structure, light is not incident on color filter 6 by micro-lens array 4, therefore the discoloration of color filter 6 will not be accelerated as in the image display device shown in Fig.1. Since color filter 6 is disposed outside liquid crystal display panel 5, the filter can be replaced even if color filter 6 has been discolored. Besides, this arrangement permits use of non-defective micro-lens array 4, liquid crystal display panel 5 or color filter 6 selectively if any of these members is individually defective, so that the production yield can be improved sharply.

In this embodiment, since micro-lens array 4 is disposed on the side of opposing substrate 5b, the thickness D1 of active matrix substrate 5a is set up to be smaller than the thickness D2 of opposing substrate 5b. In contrast to this, if active matrix substrate 5a is formed on the side of micro-lens array 4, the effect of the present invention can be obtained by setting up the thickness D1 of active matrix substrate 5a greater than the thickness D2 of opposing substrate 5b.

In the above embodiment, lenses of micro-lens array 4 are prepared by treating glass by the ion exchange process so that the glass has a refractive distribution, but the preparation of the lenses can be performed by other methods such as, for example, the swelling process, the thermal sagging process and machining process. The swelling process is a process in which a lens shape is formed by copolymerizing photosensitive monomer material with ultraviolet rays to cause the light-exposed portion of the material to swell making use of the differential osmotic pressure generated between the exposed portion and non-exposed portion. The thermal sagging process is a process in which a lens shape is formed by patterning a photosensitive resin into a circle, and then heating the material above its melting point to be fused and forming a lens shape making use of the surface tension. The machining process is a process in which a substrate member is machined or cut out into a lens shape. Examples of the material include transparent resins such as acrylic resins, polycarbonate resins, polystyrene resins, etc., as well as glass.

Although the telecentric illuminating system is exemplarily shown in this embodiment, other illuminating systems such as, for example, the critical illuminating system, Köhler illuminating system can also be applied to the present invention.

As has been clear from the description heretofore, according to the projecting type color image display device of the present invention, it is possible to present images, excellent in color reproduction performance by preventing color mixture.

In addition, if the color filter has been discolored, it is possible to replace the filter, moreover, the present invention permits use of the non-defective micro-lens array, the liquid crystal display panel or the color filter selectively if any of these members is individually defective, so that the production yield can be improved sharply.

## Claims

1. A projection type colour image display device having a micro-lens array (4), and a liquid crystal display panel (5) comprising a pair of substrates (5a, 5b), light being incident, in use, on the micro-lens array side of the device; wherein the device further comprises blocking means disposed between the pair of substrates (5a, 5b);
the display device being characterised in that the substrate (5b) of said liquid crystal display panel nearer to said micro-lens array (4) is thicker than the substrate of said panel further from the micro-lens array;
in that the display device comprises a colour filter (6) having adjacent colour filter sections (6a), the micro-lens array (4), the liquid crystal display panel (5) and the colour filter section being disposed in that order;
and in that the blocking means, the pixels of the liquid crystal panel (5) and the colour filter sections (6a) are so arranged and so dimensioned that light which passes through a pixel is incident only on a colour filter section corresponding to the pixel, the light passing through the colour filter sections being divergent.

2. A projection type colour image display device according to Claim 1, wherein said micro-lens array is formed by process of ion exchanging, swelling, thermally sagging or machining.

3. A projection type colour image display device according to Claim 1, wherein an illumination means for illuminating the display device uses any of a telecentric illuminating system, a critical illuminating system and a Köhler illuminating system.

## Patentansprüche

1. Farbbild-Anzeigevorrichtung vom Projektionstyp mit einer Mikrolinsenanordnung (4) und einer Flüssigkristall-Anzeigetafel (5) mit einem Paar Substrate (5a, 5b), wobei im Gebrauch Licht auf die Seite der Vorrichtung mit der Mikrolinsenanordnung fällt; wobei die Vorrichtung ferner eine Ausblendeinrichtung aufweist, die zwischen dem Paar Substraten (5a, 5b) angeordnet ist; **dadurch gekennzeichnet**, dass
- das Substrat (5b) der Flüssigkristall-Anzeigetafel, das näher an der Mikrolinsenanordnung (4) liegt, dicker als das Substrat der Tafel ist, das weiter von der Mikrolinsenanordnung weg liegt;
- die Anzeigevorrichtung ein Farbfilter (6) mit benachbarten Farbfilterabschnitten (6a) aufweist, wobei die Mikrolinsenanordnung (4), die Flüssigkristall-Anzeigetafel (5) und der Farbfilterabschnitt in dieser Reihenfolge angeordnet sind; und
- die Ausblendeinrichtung, die Pixel der Flüssigkristalltafel (5) und die Farbfilterabschnitte (6a) so angeordnet und so dimensioniert sind, dass Licht, das durch ein Pixel gelaufen ist, nur auf denjenigen Farbfilterabschnitt fällt, der dem Pixel entspricht, wobei das durch die Farbfilterabschnitte laufende Licht divergent ist.

2. Farbbild-Anzeigevorrichtung vom Projektionstyp nach Anspruch 1, bei der die Mikrolinsenanordnung durch einen Ionenaustauschprozess, einen Quellprozess, einen thermischen Einsenkprozess oder maschinelle Bearbeitung ausgebildet ist.

3. Farbbild-Anzeigevorrichtung vom Projektionstyp nach Anspruch 1, bei der eine Beleuchtungseinrichtung zum Beleuchten der Anzeigevorrichtung ein telezentrisches Beleuchtungssystem, ein kritisches Beleuchtungssystem oder ein Köhler-Beleuchtungssystem verwendet.

## Revendications

1. Dispositif d'affichage d'images en couleurs du type à projection, comportant un groupement de microlentilles (4) et un panneau d'affichage à cristaux liquides (5) comprenant une paire de substrats (5a, 5b), la lumière arrivant, en service, sur le côté groupement de microlentilles du dispositif, dans lequel le dispositif comprend en outre des moyens de blocage, disposés entre la paire de substrats (5a, 5b) ;
le dispositif d'affichage étant caractérisé en ce que le substrat (5b) dudit panneau d'affichage à cristaux liquides, situé le plus près dudit groupement de microlentilles (4) est plus épais que le substrat dudit panneau, qui est situé plus loin du groupement de microlentilles ;
en ce que le dispositif d'affichage comprend un filtre coloré (6) présentant des parties adjacentes formant filtre coloré (6a), le groupement de microlentilles (4), le panneau d'affichage à cristaux liquides (5) et le filtre coloré étant disposés dans cet ordre ;
et en ce que les moyens de blocage, les pixels du panneau d'affichage à cristaux liquides (5) et les parties formant filtre coloré (6a) sont disposés et dimensionnés de telle manière que la lumière, traversant un pixel, arrive uniquement sur une partie formant filtre coloré, qui correspond au pixel, la lumière passant à travers les parties formant filtre coloré étant divergente.

2. Dispositif d'affichage d'images en couleurs du type à projection selon la revendication 1, dans lequel ledit groupement de microlentilles est formé par une opération d'échange d'ions, de gonflement, de flexion par voie thermique ou d'usinage.

3. Dispositif d'affichage d'images en couleurs du type à projection selon la revendication 1, dans lequel un moyen d'éclairage servant à l'éclairage du dispositif d'affichage fait appel soit à un système d'éclairage télécentrique, soit à un système d'éclairage critique soit à un système d'éclairage de Köhler.
